# EUROPÄISCHE PATENTSCHRIFT

(11) **EP 0 550 484 B1**
(45) Veröffentlichungstag und Bekanntmachung des Hinweises auf die Patenterteilung: **03.07.1996**
(21) Anmeldenummer: 91916060.6
(22) Anmeldetag: 20.09.1991
(51) Int. Cl.: H04Q 3/72, H04M 3/42

(54) **KOMMUNIKATIONSSYSTEM, INSBESONDERE ISDN-FÄHIGE FERNMELDENEBENSTELLENANLAGE**
COMMUNICATION SYSTEM, IN PARTICULAR ISDN-CAPABLE TELECOMMUNICATIONS PRIVATE AUTOMATIC BRANCH EXCHANGE
SYSTEME DE COMMUNICATION, NOTAMMENT AUTOCOMMUTATEUR PRIVE AUTOMATIQUE DE TELECOMMUNICATIONS CONNECTABLE A UN RESEAU NUMERIQUE A INTEGRATION DE SERVICES (RNIS)

(30) Priorität: 26.09.1990 EP 90118491
(43) Veröffentlichungstag der Anmeldung: 14.07.1993
(73) Patentinhaber: SIEMENS AKTIENGESELLSCHAFT, D-80333 München (DE)
(72) Erfinder: JAHN, Alfred, D-8000 München 70 (DE); KREMER, Teodor, CH-8052 Zürich (CH); WEISIGK, Günther, CH-8903 Birmensdorf (CH)
(86) Internationale Anmeldenummer: EP9101801
(87) Internationale Veröffentlichungsnummer: WO9205671

(56) Entgegenhaltungen:
- US-A- 3 385 933
- US-A- 3 521 001
- BRITISH TELECOMMUNICATIONS ENGINEERING Bd. 7, Nr. 1, April 1988, LONDON Seiten 46 - 57; C.G. DAVIES: 'CCITT Signalling System No. 7: Integrated Services Digital Network User Part'

## Beschreibung

Die Erfindung betrifft ein Kommunikationssystem nach dem Oberbegriff des Patentanspruchs 1.

Aus Bergmann, Lehrbuch der Fernmeldetechnik, Band 1, 5. Auflage, Berlin 1986, Seiten 749 ff. sind bereits Kommunikationssysteme mit Notruf-Abfrageeinrichtungen bekannt. Eine dort dargestellte Notruf-Abfrageanlage weist ein an Anschlußorgane angekoppeltes Abfragekoppelfeld auf, das ausgangsseitig über eine Abfrageeinrichtung mit einer Tonband-Anschaltungseinrichtung verbunden ist. Die bekannte Notruf-Abfrageanlage ist weiterhin, sofern sie keine Vermittlungseinrichtung aufweist, mit einem weiteren Koppelfeld verbunden, über das jeder Arbeitsplatz der Anlage jeden anderen Arbeitsplatz über einen besonderen Sprechweg rufen und mit ihm sprechen kann. Sofern die bekannte Notruf-Abfrageanlage mit einer handbedienten Vermittlungseinrichtung ausgestattet ist, enthält sie ein Vermittlungskoppelfeld. Die bekannte Anlage weist damit mehr als ein Koppelfeld auf.

Aus dem US-Patent 3,385,933 ist bereits eine sogenannte Fangschaltung bekannt, d.h. eine Schaltungsanordnung, die dazu dient, sendeseitige Teilnehmerstellen zu ermitteln, die unerwünschte Verbindungen zu einer empfangsseitigen Teilnehmerstelle herstellen ("Annoyance call tracing arrangement recording called party identification and voice sample"). Dabei können die sendeseitigen Teilnehmerstellen und die empfangsseitige Teilnehmerstelle unterschiedlichen Ämtern zugeordnet sein. Die bekannte Schaltungsanordnung besteht aus einem ersten Schaltungsanordnungsteil, der dem Amt der sendeseitigen Teilnehmerstelle zugeordnet ist, und aus einem zweiten Schaltungsanordnungsteil, der dem Amt der empfangsseitigen Teilnehmer stelle zugeordnet ist. Die Ermittlung einer sendeseitigen Teilnehmerstelle wird durch ein Sonderzeichensignal ausgelöst, das durch den empfangsseitigen Schaltungsanordnungsteil durch Wahl eines entsprechenden Sonderzeichens erzeugt wird. Die bekannte Schaltungsanordnung ist weiterhin in der Weise ausgestaltet, daß nach der Ermittlung der sendeseitigen Teilnehmerstelle von dort übermittelte Sprachproben für eine mögliche Sprecherkennung aufgezeichnet werden.

Auch aus dem US-Patent 3,521 001 ist eine Fangschaltung bekannt ("Malicious call holding and tracing circuit"). Diese bekannte Schaltungsanordnung ist ebenfalls in der Weise ausgestaltet, daß die Ermittlung einer sendeseitigen Teilnehmerstelle durch eine empfangsseitig manuell vorzunehmende Schaltungsmaßnahme ("flashing of the called subscribed handset") ausgelöst wird. Diese Schaltungsmaßnahme ist weiterhin eine Vorraussetzung für die Aufzeichnung der Sprechkommunikation zwischen dem sendeseitigen und empfangsseitigen Teilnehmer.

Der Erfindung liegt die Aufgabe zugrunde, ein Kommunikationssystem der eingangs genannten Art derart auszugestalten, daß im Rahmen hergestellter Fernmeldeverbindungen übertragene Nutzdaten selbsttätig aufgezeichnet werden.

Die Lösung dieser Aufgabe erfolgt erfindungsgemäß mit den Merkmalen des Patentanspruchs 1.

Die Erfindung zeichnet sich durch eine Mehrzahl von Vorteilen aus. Zunächst lassen sich vorhandene Kommunikationssysteme, insbesondere ISDN-fähige Fernmeldenebenstellenanlagen in einfacher Weise in Kommunikationssysteme gemäß der Erfindung umgestalten.

Erforderlich ist lediglich eine Änderung des Betriebsprogramms der Systemsteuerungen und die an sich bekannte Anschaltung einer Speichereinrichtung an das System. Das System weist insbesondere Teilnehmeranschlußschaltungen auf, die sowohl den Anschluß von Endgeräten als auch der Speichereinrichtung ermöglichen.

Die Aufzeichnung der Nutzdaten erfolgt mit einem nur geringen vermittlungstechnischen Mehraufwand. Zur vollständigen Aufzeichnung aller Nutzdaten ist eine permanente Abfrage sämtlicher Endgeräte des Systems nicht erforderlich; vielmehr werden nur die an einer Fernmeldeverbindung beteiligten Endgeräte mit einer Speichereinrichtung vermittlungstechnisch verbunden, in die die im Rahmen der Fernmeldeverbindung ausgetauschten Nutzdaten, insbesondere Sprachinformationen, eingespeichert werden.

Die erfindungsgemäße Ausgestaltung des Kommunikationssystems ermöglicht auch, daß mindestens einem Teil der Fernmeldeendgeräte Schaltmittel zur Erzeugung erster Steuerbefehle zugeordnet sind, wobei die Teilsteuerwerke der zugehörigen Teilnehmeranschlußschaltungen in der Weise ausgebildet sind, daß diese ausgelöst durch erste Steuerbefehle, die mittels der fernmeldeendgeräteindividuellen Schaltmittel erzeugt und in einem Steuerkanal der jeweiligen Teilnehmeranschlußschaltung zugeführt werden, zweite Steuerbefehle erzeugt. Dabei ist die zentrale Steuerung in der Weise ausgebildet, daß sie ausgelöst durch einen zweiten Steuerbefehl lediglich die Fernmeldeverbindung zu dem Endgerät des Zielteilnehmers herstellt. Damit besteht für Benutzer von Endgeräten, denen ein Schaltmittel zugeordnet ist, die Möglichkeit, eine Aufzeichnung der im Rahmen einer Fernmelde-, insbesondere Fernsprechverbindung ausgetauschten Daten zu unterbinden.

Nach einer weiteren vorteilhaften Ausgestaltung der Erfindung sind zwischen der Speichereinrichtung und der angekoppelten Teilnehmeranschlußschaltung eine der aufzunehmenden Nutzdatenmenge entsprechende Anzahl von Nutzdatenkanälen vorgesehen, um selbst bei maximaler Belastung des Kommunikationssystems eine ausreichende Speicherkapazität für die Aufzeichnung aller Nutzdaten bereitzustellen.

Die Erfindung wird nun anhand der Zeichnung in einem zum Verständnis erforderlichen Umfang beschrieben.

Das in der Figur schematisch dargestellte erfindungsgemäße Kommunikationssystem ist insbesondere eine ISDN-fähige Fernmeldenebenstellenanlage, die in ihrer Grundstruktur wie das in der Produktschrift der Fa. Siemens, "ISDN in the Office", Special Issue of telecom report and Siemens Magazine COM, S. 56-64 ISDN-3-8009-3849-9 beschriebene Kommunikationssystem ausgebildet sein kann. Diese Anlage besteht aus einer Systemzentrale PBX mit einer zentralen Steuerung CC, die mit sogenannten Peripheriemodulen und einem zentralen Koppelnetz SN verbindbar ist. Die Peripheriemodule umfassen insbesondere Teilnehmeranschlußschaltungen SLM11 ... SLMx ... SLMnm sowie sogenannte Leitungssatzschaltungen TH11...

Die Teilnehmeranschlußschaltungen SLM11 sind teilnehmerorientierte digitale Geräteanschlüsse PCM30 - oder ISDN-Anschlüsse (BA, Primary Rate Interface PRI) für digitale mono- und multifunktionale Endgeräte, Mehrkanal-Anschlußmodule für Endgeräte wie digitale Sprachendgeräte und Vermittlungsendgeräte sowie Teilnehmeranschlüsse für analoge Sprachendgeräte.

Die Leitungssatzschaltungen TM11... dienen zur Verbindung mit öffentlichen und/oder privaten digitalen und analogen Netzen bzw. Sondereinrichtungen und sind beispielsweise ISDN-Basisanschlüsse für ISDN-Amts- und Querverkehr (zwei Kanäle zu 64 Kbit/s und ISDN-Signalisierung) sowie digitale Schnittstelleneinheiten (digital interface unit), d. h. Multiplexanschlüsse (30 Kanäle zu je 64 Kbit/s) mit den Betriebsarten Amts- und Querverkehr mit ISDN-Signalisierung, Querverkehr mit kanalassoziierter Signalisierung.

Alle Perpheriemodule SL11, ... TM11... haben die gleiche systeminterne Schnittstelle. Sie koppeln die einzelnen Basis- oder Nutzdatenkanäle B, auf denen Nutzdaten, d. h. Sprach- und/oder Dateninformationen übertragen werden, an eine beliebige Auswahl aus zwei Muliplexkanälen (Highways) mit beispielsweise 32 Kanälen des Koppelnetzes SN und übergeben die in einem Steuerkanal D übertragenen Signalisierungsinformationen als HDLC-Protokoll an die Steuerung CC. Jedes Perpheriemodul weist eine Steuerung PBC11... auf, deren Aufgabe es ist, belegte Anschlußkanäle zu ausgewählten Kanälen der Multiplexkanäle gegebenenfalls im Zusammenhang mit einer Steuerung AE ST1... einer zugehörigen Anschlußeinheit zu zuordnen.

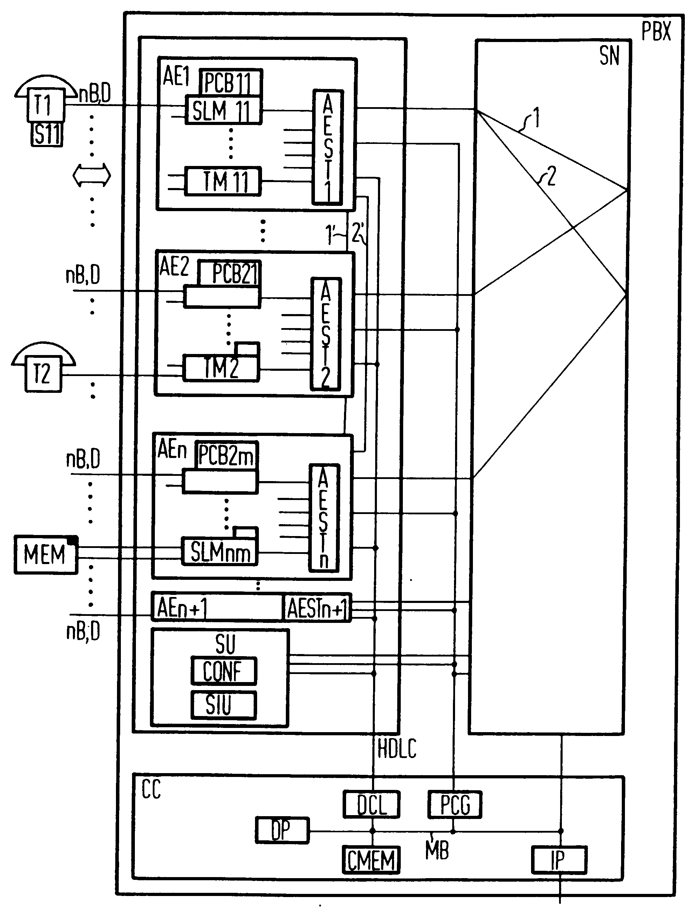

Mehrere Peripheriemodule können funktionell zu einer Anschlußeinheit AE zusammengefaßt werden. Jede Anschlußeinheit AE1...-AEn, AEn+1 ist eine Steuerung AE ST1... zugeordnet und mit dem zentralen Koppelnetz SN über beispielsweise vier Sprach-Daten-Multiplexkanäle miteinander verbunden. Der Meldungsaustausch zwischen den Peripheriemodulen und der zentralen Steuerung CC erfolgt über einen Signalisierungskanal der in der Figur 1 mit dem Bezugszeichen HDLC bezeichnet ist, im bekannten HDLC-Punktzu-Mehrpunkt-verfahren.

Die Anschlußeinheiten können auch über Querverbindungsleitungen miteinander verbunden sein, um das zentrale Koppelnetz SN und die zentrale Steuerung CC zu entlasten.

Mehreren Anschlußeinheiten AE1...AEn kann eine sogenannte Serviceeinheit SU zugeordnet sein. Diese umfaßt eine Signalisierungseinheit SIU und gegebenenfalls eine Konferenzeinrichtung CONF. Die Signalisierungseinheit SIU übernimmt die Zeichenversorgung des Systems mit Hörtönen und gegebenenfalls mit Ansagen, sowie den Empfang von MFV-Taktwahlzeichen und Amtswähltönen. Diese Funktion wird in ansich bekannter Weise mit Signalprozessoren realisiert.

Die Signalisierungseinheit SIU ist über zwei Sprach-Daten-Multiplexkanäle bei fester Funktionszuordnung mit dem Koppelnetz SN verbunden.

Die Konferenzeinrichtung CONF ermöglicht Konferenzverbindungen, d. h. die Verbindung mindestens dreier Teilnehmer, sowie die Leistungsmerkmale "anklopfen" und "aufschalten".

Das zentrale Koppelnetz SN ist vorzugsweise modular aufgebaut und besteht beispielsweise aus einer blockierungsfreien Zeitstufe für 16 Sprach-Daten-Multiplexkanäle. Durch Zusammenschalten zweier derartiger Grundmodule entsteht eine Koppelstufe für 1024 Zeitlagen (32 Multiplexkanäle zu je 32 Kanälen). Die in dieser Weise gebildete blockierungsfreie Zeitstufe verbindet von den je 32 ankommenden und abgehenden Multiplexkanälen für Sprache oder Daten jeweils zwei beliebige der 32 Zeitlagen miteinander. Neben Einkanalverbindungen können auch Breitbandverbindungen hergestellt werden.

Die zentrale Steuerung CC übernimmt die entsprechend dem Peripherieausbau anfallende vermittlungstechnische Verarbeitung. Sie besteht aus einem Datenprozessor DP, einem Prozessor für Signalisierungssteuerung DCL, einem programmierbaren Taktgenerator PCG, einem Speicher CMEM und einem Schnittstellenprozessor IP, der mit einer in der Figur nicht dargestellten betriebstechnischen Einheit verbunden ist. Die genannten Komponenten sind über einen Multibus MB wie in der Figur dargestellt miteinander verbunden.

Für den Datenprozessor DP werden vorzugsweise Prozessoren der Reihe SAB 8086/80286 (Firma Siemens) verwendet. Der Speicher CMEM enthält hoch integrierte dynamische RAM-Bausteine und Fehlerkorrekturschaltungen.

Der Prozessor DCL für Signalisierungssteuerung dient dem Abwikkeln des HDLC-Protokolls zu den Anschlußeinheiten AE1... AEn+1 und der Serviceeinheit SU.

Der Taktgenerator PCG führt die Taktversorgung des Kommunikationssystems durch. Mit den Teilnehmeranschlußschaltungen SLM11... sind wie in der Figur schematisch dargestellt Fernmeldeendgeräte sowie eine Speichereinrichtung MEM verbindbar. Nutzdaten, d. h. Sprachinformationen oder Daten werden vorzugsweise über einen oder mehrere (ISDN-) Basis- oder Nutzdatenkanäle B und Signalisierungsinformationen in einem (ISDN-) Steuerkanal D bidirektional zwischen Endgeräten und Teilnehmeranschlußschaltungen bzw. zwischen der Speichereinrichtung MEM und der zugehörigen Teilnehmeranschlußschaltung übertragen.

Das Betriebsprogramm der Steuerungen CC und AEST1 ... AESTn ist in der Weise ausgestaltet, daß diese neben der üblichen Verbindungsherstellung zwischen mindestens zwei Endgeräten zusätzlich eine zu der ersten Verbindung 1 bzw.1' parallele, zweite Verbindung zu der Speichereinrichtung MEM herstellen. Die im Rahmen der ersten Verbindung ausgetauschten Nutzdaten werden durch die zweite Verbindung in die Speichereinrichtung MEM durchgeschaltet. Dabei kann die erste Verbindung zwischen zwei internen Endgeräten sowie zwischen einem internen und einem externen Endgerät hergestellt werden. Die erste Verbindung kann auch eine Konferenzverbindung sein, bei der mindestens drei Teilnehmer in die Verbindung einbezogen sind.

Die von der jeweiligen Steuerung CC oder AEST1 ... AESTn hergestellte zweite Verbindung 2 bzw. 2' führt sämtliche Nutzdaten, die im Rahmen kommender und gehender Verbindung zwischen internen bzw. externen Endgeräten hergestellt werden, auf die Speichereinrichtung MEM. Die jeweilige Steuerung stellt die ersten und zweiten Verbindungen parallel zueinander, also gleichzeitig her. Zweite Verbindungen werden also nur hergestellt, wenn auch erste Verbindungen hergestellt werden. Eine zyklische Abfrage der Endgeräte bzw. der Teilnehmeranschlußschaltungen auf gegebenenfalls übertragene Nutzdaten erübrigt sich somit.

An das in Figur dargestellte Kommunikationssystem ist beispielsweise über die Teilnehmeranschlußschaltung SLM11 (Anschlußeinheit AE1) ein internes Fernmeldeendgerät T1 angeschlossen. Zwischen diesem und einem externen Endgerät T2, dem eine Leitungsschaltung TM2 (Anschlußeinheit AE2) zugeordnet ist, besteht eine von der Steuerung CC über das Koppel netz SN hergestellte erste Verbindung, die in der Figur 1 mit dem Bezugszeichen 1 versehen ist. Gleichzeitig besteht eine zweite Verbindung, in die die beiden Endgeräte T1 und T2 sowie eine Speichereinrichtung MEM (Anschlußeinheit AE3) einbezogen sind, die wie ein internes Endgerät an die Teilnehmeranschlußschaltung SLM angeschlossen ist. Die zweite Verbindung 2 wird wie bereits beschrieben von der Steuerung CC hergestellt (gleichzeitig mit der ersten Verbindung 1). Anstelle der zweiten Verbindung 2 über das zentrale Koppelnetz kann eine zweite Verbindung 2' über die Querverbindungsleitung hergestellt werden, die die Anschlußeinheiten AE1 und AEn miteinander verbindet.

Zwischen der Speichereinrichtung MEM und der zugehörigen Teilnehmeranschlußschaltung SLMnm kann eine Vielzahl von Nutzdatenkanälen bereitgestellt werden, um bei einer Mehrzahl gleichzeitig hergestellter erster Verbindungen alle im Rahmen der entsprechenden ersten Verbindungen ausgetauschen Nutzdaten aufzunehmen. Dies ist in der Figur durch die doppelt geführte Linie zwischen der Speichereinrichtung MEM und der Teilnehmeranschlußschaltung SLMnm schematisch dargestellt.

Das Kommunikationssystem gemäß der Erfindung kann auch in der Weise ausgestaltet sein, daß mindestens einem Teil der internen Endgeräte Schaltmittel S11..., beispielsweise Funktionstasten zur Erzeugung erster Steuerbefehle zugeordnet sind. Diese Steuerbefehle bewirken wie im folgenden beschrieben, daß die im Rahmen einer hergestellten ersten Verbindung ausgetauschten Nutzdaten nicht in die Speichereinrichtung MEM durchgeschaltet werden.

Hierzu sind die Teilsteuerwerke PCB11 ... der Teilnehmeranschlußschaltungen SLM11... in der Weise ausgebildet, daß diese ausgelöst durch die fernmeldeendgeräteindividuellen Schaltmittel Sll erzeugten ersten Steuerbefehle die vorzugsweise in einem Steuerkanal D der jeweiligen Teilnehmeranschlußschaltung SLM11 zugeführt werden, zweite Steuerbefehle erzeugen. Die Teilsteuerwerke PCB11 ... übermitteln die erzeugten zweiten Steuerbefehle an die zugeordnete dezentrale Steuerung AEST1, ... und gegebenfalls an die zentrale Steuerung CC, welche Steuerung ausgelöst durch diese zweiten Steuerbefehle lediglich die erste Verbindung 1 bzw. 1' herstellt. Damit wird die Aufzeichnung der Nutzdaten, die im Rahmen der betreffenden ersten Verbindung zwischen dem A- und B-Teilnehmer, z. B. T1 und T2 ausgetauscht werden, unterbunden.

Wird von einem internen Endgerät (z. B. T1) eine erste Verbindung zu einem weiteren internen Endgerät oder zu einem externen Endgerät (z. B. T2) initiiert, stellt die zentrale Steuerung CC bzw. eine dezentrale Steuerung AEST1 neben der ersten Verbindung 1 die zweite Verbindung 2 bzw. 2' zu der Speichereinrichtung MEM her. Desgleichen stellen die Steuerungen CC die zweite Verbindung 2 bzw. 2' her, wenn die erste Verbindung von einem externen einem internen Endgerät (z. B. T1) initiiert wird.

Bei einer ersten Verbindung zwischen zwei internen Endgeräten, stellen die zentrale Steuerungen CC bzw. AEST1, ... genau eine zweite Verbindung 2 bzw. 2' zu der Speichereinrichtung MEM her. Alternativ hierzu können zwei zweite Verbindungen zu der Speichereinrichtung MEM hergestellt werden, um für jedes an einer ersten Verbindung ausgetauschten Nutzdaten separat aufzuzeichnen. Eine solche separate Aufzeichnung kann auch erfolgen, wenn nur eine zweite Verbindung hergestellt wird. Eine in der Figur nicht dargestellte Steuerung, die der Speichereinrichtung MEM zugeordnet ist, veranlaßt in diesem Fall, die im Rahmen einer Verbindung ausgetauschten und der Speichereinrichtung zugeführten Nutzdaten, zu kopieren und unter einer dem zugehörigen Endgerät zugeordneten Adresse abzulegen.

Um die Speicherkapazität der Speichereinrichtung MEM wirtschaftlich zu nutzen, werden die im Rahmen einer ersten Verbindung ausgetauschten Nutzdaten nur einmal abgespeichert und diese werden Adressen der beiden an der ersten Verbindung beteiligten zugeordnet.

Zwischen der Speichereinrichtung MEM und der angekoppelten Teilnehmeranschlußschaltung SLMnm kann eine der Nutzdatenmenge entsprechende Anzahl von Nutzdatenkanälen B vorgesehen werden.

## Patentansprüche

1. Kommunikationssystem, insbesondere ISDN-fähige Fernmeldenebenstellenanlage, bestehend aus einer Systemzentrale mit einer zentralen Steuerung (CC) und gegebenenfalls mit dezentralen Steuerungen (AEST1, ... , PCB11,...,) die mit Teilnehmeranschlußschaltungen (SLM11 ... ) und Leitungssatzschaltungen (TM11 ... ) verbunden sind, wobei an die Teilnehmeranschlußschaltungen (SLM11 ...) Fernmeldeendgeräte mit einem Steuerkanal (D) und mindestens einem Nutzdatenkanal (B) anschließbar sind und wobei jeder Teilnehmeranschlußschaltung eine mit der zentralen Steuerung (CC) und gegebenenfalls mit einer dezentralen Steuerung (AEST1) zusammenwirkende weitere dezentrale Steuerung (PCB11) zugeordnet ist, die der jeweiligen Teilnehmeranschlußschaltung (SLM11) und/oder Leitungssatzschaltung (TM11 ...) von einem Fernmeldeendgerät in einem Steuerkanal (D) zugeführte, eine Zielteilnehmeradresse umfassende Signalisierungsinformationen und in einem Nutzdatenkanal (B) zugeführte Nutzdaten trennt und die Signalisierungsinformationen der dezentralen Steuerung (AEST1) oder der zentralen Steuerung (CC) zuführt, welche Steuerung (AEST1, CC) entsprechend der zugeführten Signalisierungsinformation (1,1') eine erste Verbindung zu einem internen oder externen Zielteilnehmerendgerät herstellt und diesem die Nutzdaten zuführt,
**dadurch gekennzeichnet,**
daß mindestens eine Teilnehmeranschlußschaltung (SLM11 ... ) und/oder mindestens eine Leitungssatzschaltung (TM11 ... ) mit einer an dieselbe Teilnehmeranschlußschaltung (SLM11) oder an eine weitere Teilnehmeranschlußschaltung (SlMx) angekoppelte, die Nutzdaten aufnehmende Speichereinrichtung (MEM) durch eine von der dezentralen Steuerung (AEST1) oder der zentralen Steuerung (CC) selbsttätig hergestellte, zu der ersten Verbindung (1,1') parallele, zweite Verbindung (2,2') verbindbar sind.

2. Kommunikationssystem nach Anspruch 1,
**dadurch gekennzeichnet,**
daß mindestens einem Teil der Fernmeldeendgeräte Schaltmittel (S11,...) zur Erzeugung erster Steuerbefehle zugeordnet sind und daß die weiteren dezentralen Steuerungen (PCB11...) der zugehörigen Teilnehmeranschlußschaltungen (SLM11) gegebenenfalls in der Weise ausgebildet sind, daß diese ausgelöst durch die fernmeldeendgeräteindividuellen Schaltmittel (S11,...) erzeugte und in einem Steuerkanal (D) der jeweiligen Teilnehmeranschlußschaltung (SLM11) zugeführte erste Steuerbefehle zweite Steuerbefehle erzeugen, und daß die Steuerungen (CC, AEST1, ... PCB11, ...) in der Weise ausgebildet sind, daß sie ausgelöst durch einen ersten oder zweiten Steuerbefehl lediglich die erste (1,1') Verbindung zu dem Zielteilnehmerendgerät herstellt.

3. Kommunikationssystem nach einem der Ansprüche 1 oder 2,
**dadurch gekennzeichnet,**
daß zwischen der Speichereinrichtung (MEM) und der angekoppelten Teilnehmeranschlußschaltung (SLM11, SlMx) eine der aufzunehmenden Nutzdatenmenge entsprechende Anzahl von Nutzdatenkanälen (B) vorgesehen ist.

## Claims

1. Communication system, preferably ISDN capable telecommunications private branch exchange, comprising a system control centre with a centralized controller (CC) and, if appropriate with decentralized controllers (AEST1,..., PCB11,...,), which are connected to subscriber line circuits (SLM11...) and trunk circuits (TM11...), it being possible to connect to the subscriber line circuits (SLM11...) telecommunications terminal sets having a control channel (D) and at least one user-data channel (B) and there being assigned to each subscriber line circuit a further decentralized controller (PCB11), which interacts with the central controller (CC) and, if appropriate, with a decentralized controller (AEST1), separates signalling information, which comprises a destination subscriber address and is supplied to the respective subscriber line circuit (SLM11) and/or trunk circuit (TM11...) from a telecommunications terminal set in a control channel (D), and user data, which is supplied to the said subscriber line circuit and/or trunk circuit in a user-data channel (B), and supplies the signalling information to the decentralized controller (AEST1) or the central controller (CC), which controller (AEST1, CC) establishes a first connection with an internal or external destination subscriber set, in accordance with the supplied signalling information (1,1'), and supplies the user data to the said destination subscriber terminal set, characterized in that at least one subscriber line circuit (SLM11...) and/or at least one trunk circuit (TM11...) can be connected to a storage device (MEM), which is coupled to the same subscriber line circuit (SLM11) or to a further subscriber line circuit (SLMx) and receives the user data, by a second connection (2,2'), which is established automatically by the decentralized controller (AEST1) or the central controller (CC) and is parallel to the first connection (1,1').

2. Communication system according to Claim 1, characterized in that at least some of the telecommunications terminal sets are assigned switching means (S11,...) for generating first control commands and in that the further decentralized controllers (PCB11...) of the associated subscriber line circuits (SLM11) are designed, if appropriate, in such a way that these first control commands, generated in response to the switching means (S11,...) individually associated with the telecommunications terminal sets and supplied to the respective subscriber line circuit (SLM11) in a control channel (D), generate second control commands, and in that the controllers (CC, AEST1, ... PCB11, ...) are designed in such a way that, in response to a first or second control command, they establish just the first (1,1') connection to the destination subscriber terminal set.

3. Communication system according to either of Claims 1 and 2, characterized in that a number of user-data channels (B) corresponding to the volume of user data to be received is provided between the storage device (MEM) and the coupled subscriber line circuit (SLM11, SLMx).

## Revendications

1. Système de communication, notamment central privé de télécommunication compatible RNIS, constitué d'un central de système comportant une commande (CC) centrale et éventuellement des commandes décentralisées (AEST1, ... PCB11 ...,), qui sont reliées à des circuits (SLM11 ...) de raccordement d'abonnés et à des circuits (TM11 ...) joncteurs, des terminaux de télécommunication comportant un canal (D) de commande et au moins un canal (B) de données utiles pouvant être connectés aux circuits (SLM11 ...) de raccordement d'abonnés et une autre commande décentralisée (PCB11), qui coopére avec la commande centrale (CC) et éventuellement avec une commande décentralisée (AEST1), qui sépare les informations de signalisation envoyées au circuit (SLM11) considéré de raccordement d'abonnés et/ou au circuit (TM11 ...) joncteur par un terminal de télécommunication dans un canal (D) de commande et comprenant une adresse d'abonné destinataire et des données utiles envoyées dans un canal (B) de données utiles et qui envoie les informations de signalisation à la commande décentralisée (AEST1) ou à la commande centrale (CC), étant associée à chaque circuit de raccordement d'abonné, laquelle commande (AEST1, CC) établissant en fonction de l'information (1, 1') de signalisation envoyée, une première communication vers un terminal d'abonné destinataire interne ou externe et envoyant à celui-ci les données utiles,
caractérisé en ce que
au moins un circuit (SLM11 ...) de raccordement d'abonnés et/ou au moins un circuit (TM11 ...) joncteur peut être relié à un dispositif (MEM) de mémoire couplé au même circuit (SLM11) de raccordement d'abonnés ou à un autre circuit (S1Mx) de raccordement d'abonné et recevant les données utiles par une seconde communication (2, 2') établie automatiquement par une commande parmi la commande décentralisée (AEST1) ou la commande centrale (CC) et en parallèle avec la première communication (1, 1').

2. Système de communication suivant la revendication 1,
caractérisé en ce que
des moyens (S11, ...) de commutation destinés à la production de premières instructions de commande sont associés à au moins une partie des terminaux de télécommunication, les autres commandes (PCB11 ...) décentralisées des circuits (SLM11) de raccordement d'abonnés associés sont formées éventuellement de telle sorte que ces premières instructions de commande produites par déclenchement par les moyens (S11 ...) de commutation propres à chaque terminal de télécommunication et envoyées dans un canal (D) de commande de chaque circuit (SLM11) de raccordement d'abonnés produisent de secondes instructions de commande et les commandes (CC, AEST1, ..., PCB11, ...) sont formées de telle sorte qu'elles n'établissent la première (1, 1') communication vers le terminal d'abonné destinataire que par déclenchement par une première ou seconde instruction de commande.

3. Système de communication suivant l'une des revendications 1 et 2,
caractérisé en ce que
il est prévu entre le dispositif (MEM) de mémoire et le circuit (SLM11, S1Mx) de raccordement d'abonné couplé un nombre de canaux (B) de données utiles correspondant à la quantité de données utiles à recevoir.
